Europäisches Patentamt

European Patent Office

Office européen des brevets

(11) Numéro de publication: **0 285 463 B1**

# FASCICULE DE BREVET EUROPEEN

(45) Date de publication de fascicule du brevet: **16.12.92**   (51) Int. Cl.5: **G05D 1/12**, F41G 9/00

(21) Numéro de dépôt: **88400192.6**

(22) Date de dépôt: **28.01.88**

(54) **Dispositif pour le pilotage d'un aérodyne à partir d'un élément de l'environnement extérieur désigné par le pilote.**

(30) Priorité: **30.03.87 FR 8704372**

(43) Date de publication de la demande:
**05.10.88 Bulletin 88/40**

(45) Mention de la délivrance du brevet:
**16.12.92 Bulletin 92/51**

(84) Etats contractants désignés:
**DE GB IT**

(56) Documents cités:
**EP-A- 0 044 777**
**GB-A- 2 004 828**
**US-A- 2 979 289**
**US-A- 4 312 262**

**NAECON 1986, vol. 2, 1986, pages 538-549, IEEE; J.K. RAMAGE et al.: "AFTI/F-16 automated maneuvering attack system configuration development and integration"**

**REVUE INTERNATIONALE DE DEFENSE, vol. 16, no. 6, 1983, pages 805-808, Couitrin-Genève, CH; W.H. REES: "Le système intégré de commande du vol et de conduite du tir"**

(73) Titulaire: **SEXTANT AVIONIOUE**
**Immeuble le Galilée Parc Tertiaire de Meudon 5/7 rue Jeanne Braconnier**
**F-92366 Meudon la Forêt Cédex(FR)**

(72) Inventeur: **Gayraud, Pierre**
**11, rue de la Bourgogne**
**F-92190 Meudon(FR)**
Inventeur: **Huynh, Thieu Knanh**
**3, rue des Fougères**
**F-78310 Maurepas(FR)**
Inventeur: **Thebaud, Jacques**
**19, rue Lebrun**
**F-75013 Paris(FR)**

(74) Mandataire: **Marquer, Francis et al**
**Cabinet Moutard 35, Avenue Victor Hugo**
**F-78960 Voisins le Bretonneux(FR)**

## Description

La présente invention concerne un dispositif de pilotage d'un aérodyne à partir d'un élément de l'environnement extérieur désigné par le pilote, cet élément pouvant, par exemple, consister en une cible sur laquelle on veut effectuer un tir ou même en le point d'impact d'une piste sur laquelle l'aérodyne doit atterrir.

D'une manière générale, on sait que dans les avions de combat, les phases finales de tir sont caractérisées, dans certains cas, par des amplitudes de commande relativement faibles ; par contre, la mobilité de la cible exige un pilotage précis et surtout très rapide de l'avion.

La difficulté réside dans le fait que les paramètres directs commandés par le pilote à l'aide du manche ne permettent pas un pilotage direct de l'axe de visée sur l'objectif. En effet, le dépointage de l'axe de visée s'exprime par une fonction de transfert complexe des paramètres de l'avion, fonction dans laquelle les vitesses angulaires de roulis et de tangage de l'avion, paramètres directement commandés au manche, ne sont pas les seules à intervenir.

Par ailleurs, afin de tenir compte des caractéristiques balistiques de l'arme, l'armurier introduit dans la conduite de tir des corrections de visée, dont le plus simple terme est la hausse. Ces corrections se traduisent par des déplacements de l'axe de visée par rapport aux repères avion, en fonction des mouvements de celui-ci. L'obtention d'une plus grande précision du tir implique une charge de travail du pilote considérablement accrue et un pilotage plus difficile ; en effet, la tâche du pilote consiste à amener non plus un repère fixe (par rapport à l'avion) mais un repère mobile sur l'objectif.

Il est clair qu'un axe de visée qui tiendrait compte d'un grand nombre de paramètres deviendrait vite excessivement agité lors des actions sur le manche effectuées par le pilote.

Un problème analogue se pose dans le cas où l'on veut effectuer une approche et un atterrissage en utilisant une référence visuelle du point d'impact désiré de l'avion sur la piste d'atterrissage.

L'invention a donc plus particulièrement pour but de fournir au pilote un moyen de piloter et de contrôler facilement son repère de visée, prenant en compte les mouvements de l'avion et les corrections appropriées au mode de pilotage considéré.

Pour parvenir à ce résultat, elle propose un dispositif de pilotage faisant intervenir des moyens pour sélecter un mode de pilotage, un dispositif de visualisation sur lequel peuvent être visualisés, à la fois, un élément de l'environnement extérieur constituant un objectif à atteindre tel que, par exemple, une cible ou un point d'impact, et un repère mobile de désignation indépendant des mouvements de l'avion, des moyens de commande permettant au pilote de déplacer le repère mobile en vue de l'amener en coïncidence avec l'objectif et de le maintenir sur cet objectif et des moyens de pilotage automatique aptes à effectuer le pilotage de l'aérodyne selon une loi de pilotage correspondant au mode sélecté.

Il apparaît donc que dans ce dispositif, la poursuite de l'objectif à atteindre ne s'effectue pas en agissant sur les commandes de vol de l'aérodyne en vue d'amener un repère mobile, par exemple représentatif d'un axe de visée, comme dans les dispositifs classiques, mais d'amener un repère de désignation en coïncidence avec l'objectif, au moyen d'un dispositif de commande indépendant des commandes de vol, les moyens de pilotage automatique se chargeant ensuite d'agir sur les commandes de vol de l'avion pour atteindre l'objectif désigné.

L'intérêt de cette solution consiste en ce que les déplacements du repère mobile de désignation à l'aide des susdits moyens de commande ne sont pas affectés de mouvements incontrôlés et qu'en conséquence, le pilotage de ce repère de désignation peut être exécuté par le pilote très rapidement et avec une très grande précision.

D'une façon plus précise, le dispositif de pilotage selon l'invention fait intervenir :

- une première boucle d'asservissement incluant un dispositif de visualisation, par exemple de type tête haute permettant au pilote de voir l'objectif correspondant au mode sélecté, un dispositif permettant d'afficher dans le dispositif de visualisation un repère mobile de désignation dont les déplacements sont commandés par un manipulateur pouvant éventuellement consister en le manche de pilotage de l'aérodyne préalablement déconnecté des commandes de vol, et le pilote qui agit sur le manipulateur pour amener ledit repère sur ledit objectif en annulant ainsi l'écart entre ces deux éléments,

- une deuxième boucle d'asservissement incluant un dispositif de pilotage automatique de l'avion à partir d'ordres adressés aux commandes de vol, élaborés en fonction des paramètres avion et d'un ordre de pilotage déterminé par une loi de pilotage en fonction de l'écart entre les paramètres de l'avion et les valeurs de consigne calculées en fonction de la position du susdit repère d'identification.

Des modes d'exécution de l'invention seront décrits ci-après, à titre d'exemples non limitatifs, avec référence aux dessins annexés dans lesquels :

La figure 1 est un schéma synoptique permettant d'illustrer le principe d'une conduite de tir selon la méthode classique ;

La figure 2 est un schéma synoptique d'un dispositif de pilotage de l'axe de visée d'un avion de combat, conforme à la présente invention ;

La figure 3 est le schéma d'un mode d'exécution de la chaîne de pilotage automatique du dispositif représenté figure 2 ;

Les figures 4, 5 et 6 représentent schématiquement le dispositif de visualisation utilisé dans le dispositif de pilotage selon les figures 2 et 3, au cours de différentes phases du pilotage, à savoir :

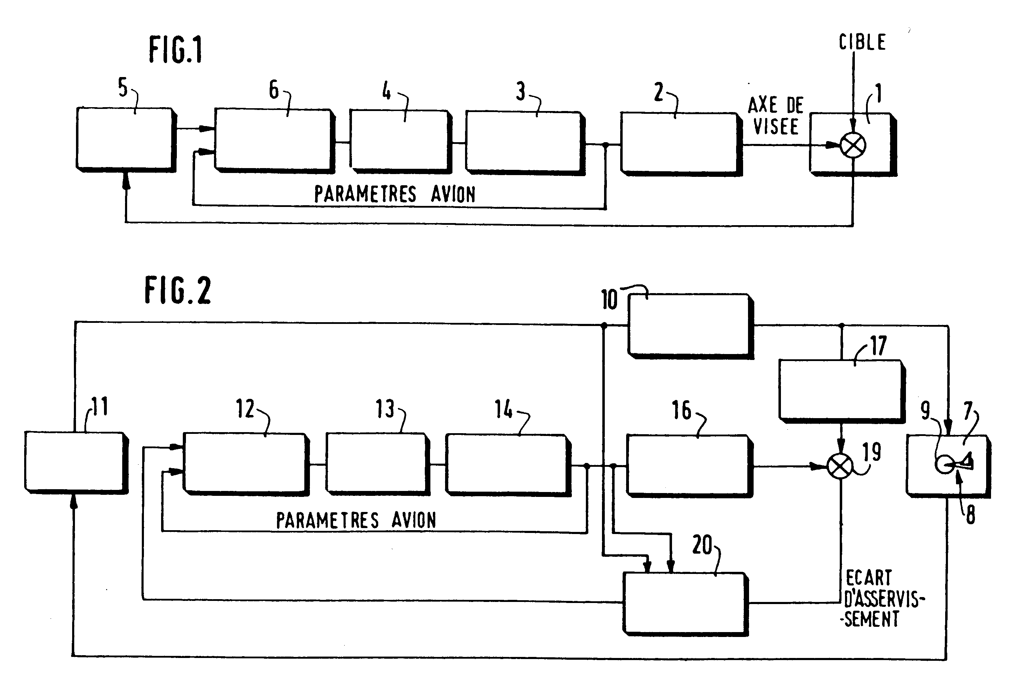

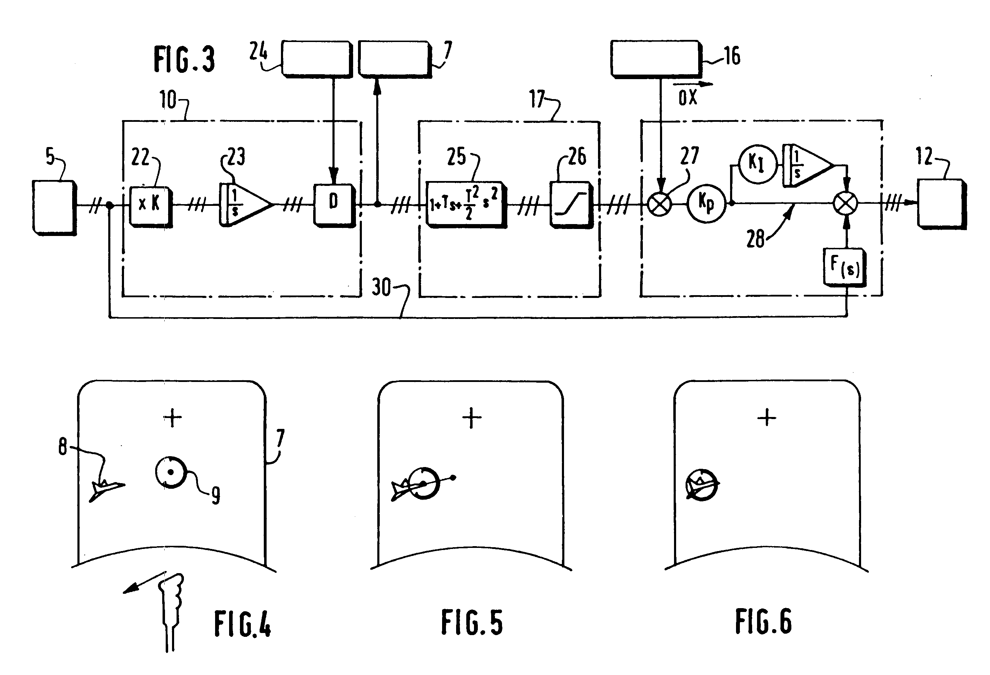

- la phase d'acquisition de la cible (figure 4),
- la phase de mise en coïncidence du repère de désignation avec la cible (figure 5),
- la phase terminale dans laquelle le tir est possible (figure 6) ;

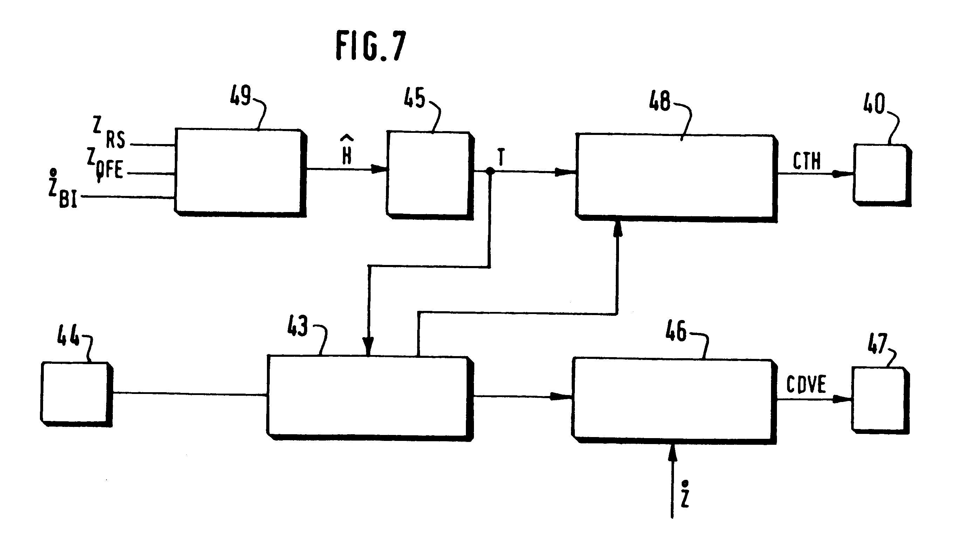

La figure 7 est une représentation schématique du système de pilotage dans le plan vertical, dans le cas du pilotage du point d'impact ;

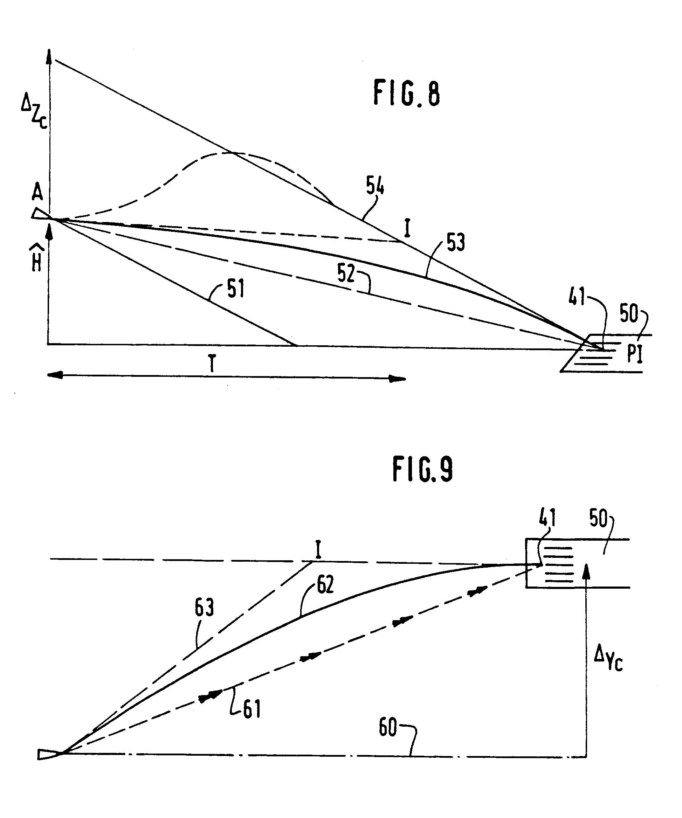

La figure 8 est un diagramme altitude/distance, permettant d'illustrer le principe du système de pilotage représenté figure 7 ;

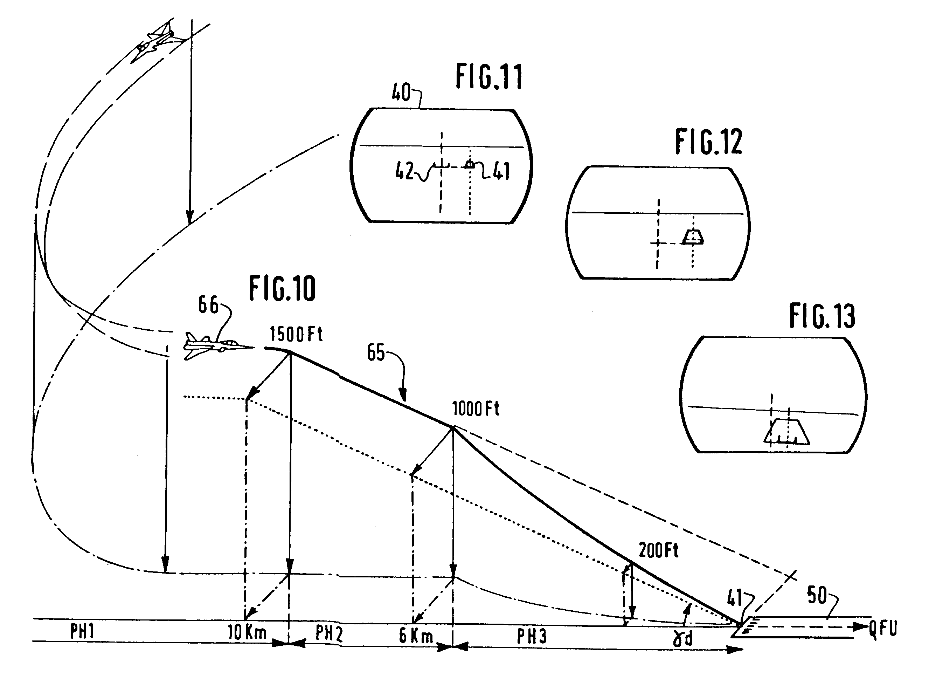

La figure 9 est un diagramme représentant la trajectoire de l'avion dans un plan horizontal, au cours de la phase d'approche ;

La figure 10 est une représentation en trois dimensions de la trajectoire de l'avion au cours de la phase d'approche ; et

Les figures 11, 12 et 13 sont des représentations schématiques du dispositif de visualisation, au cours de différentes étapes de la phase d'approche illustrée figure 10.

Il convient de noter tout d'abord que la conception d'une conduite de tir s'attache à résoudre deux types de problèmes, à savoir, l'affinage de la détermination de la trajectoire du projectile et l'estimation du but futur.

On sait, tout d'abord, que la trajectoire du projectile d'une arme est définie par ses caractéristiques physiques et des conditions initiales du tir, lesquelles font intervenir :

- les caractéristiques propres de l'arme (vitesse initiale à la sortie du canon),
- la vitesse de l'avion porteur,
- le pointage de l'arme.

Le pointage correct de l'arme doit tenir compte de la direction du vecteur vitesse avion : les corrections nécessaires sont essentiellement liées à l'incidence et au dérapage.

A ces corrections s'ajoutent celles dues, d'une part, à la pesanteur et, d'autre part, à l'erreur de parallaxe : la bouche de l'arme et la tête de visée sont situées nécessairement en des endroits distincts de l'avion. Ces deux dernières corrections font intervenir la distance tireur-but.

Ces corrections qui sont appelées "corrections tireur" sont habituellement introduites automatiquement dans l'élaboration du repère de visée que le pilote, en agissant sur ses commandes de vol, doit amener en coïncidence avec la cible.

Or, la vitesse des projectiles étant limitée, la superposition du repère de visée sur la cible, même si ce repère tient compte de toutes les corrections tireur, ne signifie pas pour autant que la collision aura lieu.

Pour permettre la correction de visée, il est nécessaire d'estimer la position future de la cible, à un intervalle de temps égal à celui mis par le projectile pour parcourir la distance "tireur-cible future".

Ce résultat peut être atteint soit par une conduite de tir dite prédictive, soit par une conduite de tir non prédictive.

Dans le cas d'une conduite de tir prédictive, la correction est évaluée à partir d'hypothèses sur le mouvement de la cible, soit par conservation du vecteur vitesse (prédiction du premier ordre) soit par conservation du facteur de charge (prédiction du second ordre).

L'inconvénient de la conduite de tir prédictive réside en ce que si l'objectif n'obéit pas à l'hypothèse de prédiction, la conduite peut devenir complètement erronée.

C'est la raison pour laquelle on utilise fréquemment une conduite de tir non prédictive consistant à visualiser, par calcul à partir de paramètres disponibles à bord de l'avion tireur, la trajectoire des obus qu'il aurait tirés à intervalles réguliers durant les deux dernières secondes. Dans ce cas, le rôle du pilote est de stabiliser, en utilisant ses commandes de pilotage, l'obus critique sur la cible puis de tirer, une fois la coïncidence atteinte, l'obus critique étant l'obus fictif situé à une distance égale à celle de la cible.

Par ce processus, le pilote place l'avion dans une configuration par rapport à la cible telle que si il avait tiré dans l'instant précédent, l'obus aurait atteint la cible ; comme il est vraisemblable que le mouvement de la cible continue à se dérouler de la même manière, si le pilote tire à cet instant, il a forte chance d'obtenir la collision.

Toutefois, le grave inconvénient des systèmes de conduite de tir usuellement utilisés et dont un exemple est schématiquement représenté sur la figure 1, consiste en la difficulté pour le pilote d'obtenir une stabilisation du repère de visée sur la cible.

En effet, sur cette figure, il apparaît clairement que les déplacements du repère de visée sur le dispositif de visualisation 1 sont élaborés par un calculateur de tir 2 approprié au type d'arme utilisé, à partir de paramètres élaborés à partir de capteurs 3 qui définissent le comportement aérodynamique de l'avion 4 et qui résultent des actions du pilote 5 sur le système de commandes de vol 6, par exemple grâce au manche et au palonnier de pilotage.

Or, en raison de la complexité de la fonction de transfert commandes de pilotage/déplacement du repère de visée, le pilote ignore le mouvement précis du repère de visée qu'engendrera une action sur les commandes de vol. Il connaît, en effet, à peu près le transfert mouvement avion/action du pilote, mais apprécie difficilement l'effet du calculateur de tir. Il est donc obligé d'agir par approximations successives, ce qui constitue une manœuvre délicate, difficile à exécuter et ne permettant pas facilement d'atteindre une bonne précision.

L'invention permet de supprimer ces inconvénients. Elle propose à cet effet un dispositif de conduite de tir comprenant, comme représenté sur la figure 2 :

a) une première boucle d'asservissement (pilotage du repère de désignation) comportant :

- un dispositif d'affichage (ou viseur) 7 permettant la visualisation de la cible 8 et d'un repère mobile de désignation 9 qui définit la position d'une cible théorique actuelle, et

- un circuit 10 de commande des déplacements du repère de désignation 9 à partir d'une action du pilote 11 sur un organe de commande, selon une loi de commande prédéterminée ;

b) une deuxième boucle d'asservissement (pilotage avion) comportant :

- une boucle de pilotage classique faisant intervenir un dispositif de commande de vol 12 agissant sur les gouvernes de l'avion 13, ainsi que des capteurs 14 permettant de déterminer les paramètres de l'avion, ces paramètres étant retransmis à l'entrée du dispositif de commande de vol 12 pour être comparés à des paramètres de consigne,

- un calculateur de conduite de tir 16 permettant de déterminer la position d'un point d'impact futur (obus futur) d'après les paramètres avion et des données balistiques propres à l'arme utilisée,

- un circuit d'élaboration d'une consigne d'obus futur 17, par un calcul d'anticipation effectué à partir des déplacements de la cible théorique actuelle,

- un circuit 19 permettant de déterminer l'écart entre la position du point d'impact futur et la consigne d'obus futur, et

- un calculateur 20 apte à élaborer les susdits paramètres de consigne de la boucle de pilotage selon une loi de pilotage déterminée, à partir du susdit écart, des paramètres avion et éventuellement des actions effectuées par le pilote sur l'organe de commande.

Il convient de préciser que, dans le dispositif précédemment décrit, le repère de désignation 9 consiste en fait en une représentation d'un point de l'espace situé à une distance D de l'avion (D étant la distance de la cible), et dont la position par rapport à un repère terrestre est calculée par une loi de commande fonction des actions du pilote sur l'organe de commande. En particulier dans le cas où cet organe de commande consiste en un manche de pilotage, la loi de commande pourra être la suivante :

- en l'absence d'effort sur le manche, le vecteur vitesse désignation est égal au vecteur vitesse avion,

- un effort sur le manche en profondeur provoque une commande de vitesse angulaire en site,

- un effort sur le manche en gauchissement provoque une commande de vitesse angulaire en gisement.

D'une façon plus précise, conformément au schéma de la chaîne de pilotage automatique représentée sur la figure 3, un ordre de commande appliqué par le pilote 5 sur le manche de pilotage engendre la rotation d'un trièdre de désignation dont :

- l'origine O consiste en le centre de gravité de l'avion,

- l'axe Oxd passe par le repère de désignation,

- l'axe Oyd est perpendiculaire au plan formé par le vecteur vitesse avion et par l'axe Oxd, et

- l'axe Ozd est perpendiculaire au plan formé par les axes Oxd et Oyd.

La position de ce trièdre est obtenue par une intégration du vecteur rotation de ce trièdre (amplificateur 22, intégrateur 23).

La détermination de la distance à la cible, par exemple par télémétrie, ou à l'aide d'un radar de bord 24 permet ensuite de déterminer la position de la cible théorique actuelle telle que précédemment définie sur l'axe Oxd. C'est cette position qui est indiquée sur le dispositif de visualisation en tant que repère de désignation.

Il convient de noter, à ce sujet, qu'en l'absence de détection d'une cible réelle par le radar 24, la distance D est limitée à une valeur prédéterminée.

L'élaboration de la consigne d'anticipation, à partir de la position de la cible théorique actuelle, fait tout d'abord intervenir un circuit prédictif du premier ordre 25 qui réalise donc la fonction :

$$1 + Ts + 1/2\ T^2s^2$$

Ce circuit prédictif 25 permet notamment de fournir à sa sortie les paramètres représentatifs de la position de la cible théorique future.

Ces paramètres sont ensuite transmis à un limiteur 26 qui sert à effectuer une limitation notamment lorsque les efforts au manche de pilotage sont trop importants pour que la cible théorique puisse coïncider avec une cible réelle.

Les informations délivrées par le limiteur 26 sont utilisées en tant que consigne d'obus futur.

Cette consigne d'obus futur est appliquée à un soustracteur 27, qui reçoit sur son autre entrée les paramètres de l'obus futur déterminés par le dispositif de conduite de tir 16.

L'écart d'asservissement délivré par le soustracteur 27 permet de déterminer par l'intermédiaire d'un régulateur 28, les ordres de gouverne transmis au dispositif de commande de vol 12.

Dans cet exemple, ces ordres de gouverne comprennent également des ordres de précommande transmis par une chaîne de précommande 30 et résultant directement des actions exercées par le pilote sur le manche de pilotage. Les ordres de gouverne élaborés par le régulateur 28 servent alors à corriger les ordres de précommande.

Le mode de fonctionnement du dispositif précédemment décrit sera exposé ci-après.

En l'absence de cible, le repère de désignation 9 indique la position d'une cible théorique située à une distance prédéterminée de l'avion sur l'axe Oxd.

Dès qu'une cible 8 apparaît dans le dispositif de visualisation 7 (figure 4), le radar de bord détermine sa distance D. Cette distance va alors se substituer à la susdite distance prédéterminée dans le calcul de la position de la cible théorique.

Le pilote doit ensuite effectuer des actions sur le manche en vue d'amener le repère de désignation 9 sur la cible 8 (figure 5). Au cours de ces actions, le dispositif 27 élabore en permanence l'écart d'asservissement entre la consigne d'obus futur et la position de l'obus futur, écart qui permet de déterminer, avec les ordres de précommande, les ordres de gouverne de l'avion.

Autrement dit, pendant cette phase, le pilote n'a pas à se préoccuper du comportement de l'aérodyne et/ou des corrections apportées par le calculateur de tir sur l'axe de visée comme dans les systèmes existants précédemment évoqués. Sa tâche est donc considérablement facilitée et il peut donc obtenir une plus grande vitesse d'exécution avec une plus grande précision.

Pendant un court instant, le pilote doit ensuite assurer un maintien en coïncidence du repère de désignation 9 et de la cible 8 de manière à ce que le circuit de prédiction 25 puisse déterminer avec précision la position future de cette cible 8 qui se confond alors avec celle de la cible théorique actuelle (figure 6).

Une fois ce résultat obtenu, le pilote peut effectuer le tir avec un maximum de chance d'obtenir la collision.

Comme précédemment mentionné, le dispositif selon l'invention s'applique également au pilotage du point d'impact de l'avion sur une piste d'atterrissage sans utilisation de moyens radioélectriques, le principe de ce pilotage du point d'impact étant de reconstituer un axe de descente à partir d'un point d'impact désigné par le pilote au moyen d'un repère de désignation affiché dans un dispositif de visualisation tel que, par exemple, un viseur tête haute.

Un tel dispositif fait donc intervenir, comme dans l'exemple précédent, un dispositif de visualisation 40 permettant au pilote de visualiser le point d'impact 41 et le repère de désignation 42, et un manipulateur permettant au pilote d'amener, pendant la phase d'approche, ce repère 42 en coïncidence avec ledit point 41.

Ainsi, au cours de l'approche, le rôle du pilote est d'affiner le positionnement du repère de désignation 42 par rapport au point d'impact désiré 41 à l'aide du manipulateur qui commande en vitesse le déplacement dudit repère 42.

En fonction de la position du point d'impact ainsi désigné, un dispositif de pilotage automatique obéissant à une loi de pilotage prédéterminée, assure le guidage de l'aérodyne sur l'axe de descente défini par le repère de désignation 42 qui sert de consigne, la pente et la route désirées. Il est clair qu'au cours de ce processus, le pilote peut se consacrer plus aisément au pilotage précis du point d'impact.

Tel que représenté sur la figure 7, le dispositif de pilotage automatique fait intervenir pour le guidage de l'aérodyne, dans le plan vertical, un générateur de trajectoire 43 servant à déterminer une trajectoire de consigne à partir, d'une part, des informations délivrées par le manipulateur 44 qui sont représentatives de la position du point d'impact 41 lorsqu'il y a coïncidence entre le point d'impact visualisé sur le dispositif de visualisation et le repère de désignation 42 et, d'autre part, d'une information représentative d'un temps T qui est calculé (bloc 45) en fonction de la hauteur estimée H de l'avion et qui permet de déterminer la position d'un point I situé T secondes en avant sur la trajectoire de consigne.

Cette trajectoire de consigne est ensuite comparée à la trajectoire de l'avion dans le bloc 46 qui détermine en fonction de cette comparaison les ordres à adresser aux commandes de vol 47 de l'avion.

Parallèlement, à partir des informations délivrées par le manipulateur 44 et du temps T qui, comme précédemment mentionné, est représentatif de la hauteur estimée de l'avion au-dessus de la piste, un calculateur 48 détermine la position du repère de désignation 42 (point d'impact de consigne).

Il convient de noter que, lors de la phase de descente, la trajectoire de consigne est établie dans un repère inertiel. Elle n'est pas référencée par rapport au sol en raison de l'incertitude dans la connaissance de la hauteur de l'avion par rapport à la piste.

Les déplacements du repère de désignation ont pour effet de translater instantanément le plan de descente de consigne.

La hauteur de l'aérodyne utilisée pour calculer la projection du point d'impact de consigne dans le dispositif de visualisation est obtenue dans le bloc 49 par combinaison de l'altitude QFE, de la hauteur déterminée par une radiosonde RS et de la vitesse verticale baroinertielle BI.

La figure 8, qui représente un diagramme hauteur/distance au sol, permet d'illustrer le principe du pilotage dans le plan vertical du dispositif précédemment décrit.

Sur cette figure :
- la référence A désigne l'avion qui vole à une hauteur estimée H, au-dessus de la piste d'atterrissage 50,
- la droite 51 représente la trajectoire initiale de l'avion,
- la droite 52, en traits interrompus, symbolise l'axe de visée passant par le repère de désignation 42 et qui a été amené en coïncidence avec le point d'impact 41 désiré sur la piste d'atterrissage 50, cette droite indiquant donc le point d'impact de consigne,
- la courbe 53 représente la trajectoire élaborée par le système de pilotage,
- la droite 54 représente la trace du plan de descente qui a été translatée à la suite de l'action du pilote sur le manipulateur.

Selon ce système de pilotage, lorsque le pilote agit sur le manipulateur et translate, en conséquence le plan de descente de consigne jusqu'à atteindre la position indiquée par la droite 54, le système élabore une trajectoire de ralliement (courbe 53) fonction de la hauteur estimée H de l'avion.

L'avion est alors guidé en "homing" vers le point I situé T secondes en avant.

Le principe du pilotage automatique dans le plan horizontal est identique à celui précédemment décrit pour le pilotage dans le plan vertical.

Dans ce cas, l'action du pilote sur le manipulateur a pour effet de décaler transversalement le plan vertical de descente.

De la même façon, le système génère une trajectoire de ralliement fonction de la hauteur H de l'aérodyne.

Tout comme le pilotage vertical exigeait la connaissance de l'altitude QFE, le pilotage dans le plan horizontal nécessite que l'alignement QFU soit connu du système.

A titre d'illustration du principe de pilotage précédemment décrit, la figure 9 représente, projetés dans un plan horizontal :
- la trace 60 du plan initial de descente de l'avion,
- l'axe de visée 61 défini par le repère de désignation, après que celui-ci ait été amené en coïncidence avec le point d'impact 41,
- la trajectoire modifiée de l'avion 62, et
- la trace 63 du plan de descente décalé.

Il convient de rappeler que conformément au principe du pilotage du point d'impact précédemment décrit, toute correction du point d'impact de consigne entraîne un mouvement de l'avion, commandé par le bloc d'asservissement pour maintenir l'avion sur la nouvelle trajectoire de consigne générée.

La figure 10 montre la trajectoire 65 d'un avion 66 lors d'une phase d'approche effectuée à l'aide d'un dispositif selon l'invention.

Dans cet exemple, au cours d'une première phase PH1, l'avion 66 se dirige vers la piste d'atterrissage 50 en navigant selon un plan de vol mémorisé. L'avion vole alors à altitude constante par exemple comme dans le cas d'une approche du type ILS. A une distance déterminée de la piste d'atterrissage 50, le pilote enclenche le mode de pilotage du point d'impact et, en conséquence, le repère de désignation 42 apparaît sur le dispositif de visualisation 40 (figure 11). Tant que le pilote n'a pas de contact visuel avec la piste, il n'a aucune raison d'agir sur son manipulateur pour modifier la position du repère de désignation 42 et, en conséquence, le pilotage de l'avion se poursuit comme en phase de navigation PH1. Dès que le pilote a le contact visuel avec la piste (figure 12), il peut déplacer le repère de désignation 42 à l'aide du manipulateur, en vue de l'amener sur le point d'impact 41. En fonction des actions du pilote sur le manipulateur, le système de pilotage effectue les corrections de navigation nécessaires PH2.

Ces corrections conduisent à modifier la trajectoire de l'avion de la façon précédemment indiquée (à la fois dans le plan vertical et dans le plan horizontal).

Au fur et à mesure que l'aérodyne se rapproche de la piste, le point d'impact 41 s'agrandit sur le dispositif de visualisation 40 (figure 13) et le pilote peut affiner sa désignation en augmentant ainsi la précision du vol PH3.

Il convient de noter qu'à l'enclenchement du mode "pilotage du point d'impact", tant que les conditions de capture de l'axe de descente reconstitué à partir des coordonnées du point d'impact ne sont pas satisfaites, le pilote peut, en déplaçant le repère de désignation 42, décaler le point de mise en descente. Dans ce cas, le pilotage en profondeur de l'avion n'est pas affecté, l'avion continue à être guidé selon le plan de vol prévu.

**Revendications**

1. Dispositif pour le pilotage d'un aérodyne à partir d'un élément de l'environnement extérieur à l'aérodyne désigné par le pilote, caractérisé en ce qu'il comprend des moyens permettant de sélecter un mode de pilotage, un dispositif de visualisation (7) sur lequel peuvent être visualisés, à la fois, un élément de l'environnement extérieur (8) constituant un objectif à atteindre et un repère mobile de désignation (9) indépendant des mouvements de l'aérodyne, des moyens de commande permettant au pilote (11) de déplacer le repère mobile de désignation (9) en vue de l'amener en coïncidence avec l'objectif (8) et de le maintenir sur cet objectif (8), et des moyens de pilotage automatique (20) aptes à effectuer le pilotage correspondant au mode sélecté, en vue d'atteindre l'objectif désigné.

2. Dispositif selon la revendication 1, caractérisé en ce que le pilotage automatique de l'avion est effectué à partir d'ordres adressés aux commandes de vol élaborés en fonction des paramètres de l'aérodyne et d'un ordre de pilotage déterminé par une loi de pilotage en fonction de l'écart entre les paramètres de l'aérodyne et une valeur de consigne calculée en fonction de la position du susdit repère mobile de désignation.

3. Dispositif selon l'une des revendications 1 et 2, caractérisé en ce qu'il comprend, pour le pilotage de l'axe de visée d'un aérodyne de combat :
   a) une première boucle d'asservissement comportant :
   - un dispositif de visualisation (7) permettant la visualisation d'une cible (8) et d'un repère mobile de désignation (9) qui définit la position d'une cible théorique actuelle, et
   - un circuit (10) de commande des déplacements du repère de désignation (9) à partir d'une action du pilote (11) sur un organe de commande, selon une loi de commande prédéterminée ;
   b) une deuxième boucle d'asservissement comportant :
   - une boucle de pilotage classique faisant intervenir un dispositif de commande de vol (12) agissant sur les gouvernes de l'avion, ainsi que des capteurs (14) permettant de déterminer les paramètres de l'avion, ces paramètres étant retransmis à l'entrée du dispositif de commande de vol (12) pour être comparés à des paramètres de consigne,
   - un calculateur de conduite de tir (16) permettant de déterminer la position d'un point d'impact futur d'après les paramètres de l'aérodyne et des données balistiques propres à l'arme utilisée par l'aérodyne,
   - un circuit d'élaboration d'une consigne d'obus futur (17), par un calcul d'anticipation effectué à partir des déplacements de la cible théorique actuelle,
   - un circuit (19) permettant de déterminer l'écart entre la position du point d'impact futur et la consigne d'obus futur, et
   - un calculateur (20) apte à élaborer les susdits paramètres de consigne de la boucle de pilotage, selon une loi de pilotage déterminée, à partir dudit écart, des paramètres de l'aérodyne et éventuellement des actions effectuées par le pilote sur l'organe de commande.

4. Dispositif selon la revendication 3, caractérisé en ce que le susdit repère de désignation (9) consiste en une représentation d'un point de l'espace situé à une distance (D) de l'aérodyne, cette distance correspondant à une distance avion/cible, et en ce que la position de ce point, par rapport à un repère terrestre, est calculée par une loi de commande fonction des actions du pilote sur l'organe de commande.

5. Dispositif selon la revendication 4, caractérisé en ce que, dans le cas où ledit organe de commande consiste en un manche de pilotage, la susdite loi de commande est prévue de manière à ce que :
   - en l'absence d'effort sur le manche, le vecteur vitesse de désignation est égal au vecteur vitesse de l'aérodyne,
   - un effort sur le manche en profondeur provoque une commande de vitesse angulaire en site,
   - un effort sur le manche en gauchissement provoque une commande de vitesse angulaire en gisement.

6. Dispositif selon la revendication 5,

caractérisé en ce que la susdite loi de commande est prévue de manière à ce qu'un ordre de commande appliqué par le pilote sur le manche de pilotage engendre la rotation d'un trièdre de désignation présentant :

- une origine (O) consistant en le centre de gravité de l'aérodyne,
- un axe (Oxd) passant par le repère de désignation (9),
- un axe (Oyd) perpendiculaire au plan formé par le vecteur vitesse de l'aérodyne et par l'axe (Oxd), et
- un axe (Ozd) perpendiculaire au plan formé par les axes (Oxd) et (Oyd).

7. Dispositif selon la revendication 4, caractérisé en ce que, en l'absence de détection d'une cible réelle, la susdite distance (D) est limitée à une valeur prédéterminée, et en ce que, lors de la détection d'une cible réelle, la distance (D) prend une valeur égale à la distance de cette cible réelle mesurée par un dispositif de mesure tel qu'un radar ou un télémètre.

8. Dispositif selon la revendication 3, caractérisé en ce que le susdit circuit permettant d'élaborer la consigne d'obus futur comprend un circuit prédictif permettant de fournir les paramètres représentatifs de la position de la cible théorique future, ces paramètres étant ensuite transmis à un limiteur qui délivre des informations utilisées en tant que consigne d'obus futur.

9. Dispositif selon l'une des revendications précédentes, caractérisé en ce que les ordres de commande transmis au dispositif de commande de vol (12) comprennent des ordres de précommande transmis par une chaîne de précommande et résultant directement des actions du pilote sur le manche de pilotage, et des ordres de gouverne élaborés par un régulateur (28) qui reçoit un signal représentatif de l'écart entre la position du point d'impact futur et la consigne d'obus futur.

10. Dispositif selon l'une des revendications 1 et 2, caractérisé en ce que, dans le but d'effectuer le pilotage du point d'impact de l'aérodyne sur une piste d'atterrissage sans utilisation de moyens radioélectriques, il comprend :

- des moyens permettant de reconstituer un axe de descente à partir d'un point d'impact (41) (qui constitue alors l'objectif) désigné par le pilote au moyen du susdit repère de désignation (42) affiché dans le susdit dispositif de visualisation, et
- un dispositif de pilotage automatique apte à assurer le guidage de l'aérodyne sur l'axe de descente ainsi reconstitué.

11. Dispositif selon la revendication 10, caractérisé en ce que le susdit dispositif de pilotage automatique comprend :

- un générateur de trajectoire (43) apte à déterminer une trajectoire de consigne à partir des informations délivrées par les susdits moyens de commande, qui sont représentatives de la position du point d'impact (41) lorsqu'il y a coïncidence entre le point d'impact visualisé sur le dispositif de visualisation et le repère de désignation (42), et d'une information représentative d'un temps (T) qui est calculé (bloc 45) en fonction de la hauteur estimée (H) de l'aérodyne au-dessus de la piste,
- des moyens permettant de déterminer la position d'un point (I) situé autant de secondes en avant sur la trajectoire de consigne que le temps calculé,
- des moyens (46) permettant de comparer la trajectoire de consigne avec la trajectoire de l'aérodyne, et de déterminer, en fonction de cette comparaison, les ordres à adresser aux commandes de vol (47) de l'aérodyne.

12. Dispositif selon la revendication 11, caractérisé en ce que la susdite trajectoire de consigne est établie dans un repère inertiel.

13. Dispositif selon la revendication 11, caractérisé en ce que la position du repère de désignation (42) est déterminée par un calculateur (48) à partir des informations délivrées par l'organe de commande et du susdit temps (T).

14. Dispositif selon l'une des revendications 10 à 13, caractérisé en ce qu'il comprend des moyens permettant de translater le plan de descente de consigne en fonction des déplacements du repère de désignation (42).

**Claims**

1. Device for controlling an aircraft according to an element of the environment external to the aircraft designated by the pilot, characterised in that it comprises means for selecting a control mode, a display device (7) on which can be shown simultaneously an element of the external environment (8) constituting a target to be attained and a mobile designator marker (9) independent of movements of the aircraft, control means enabling the pilot (11) to move the mobile designator marker (9) to render it coincident with the target (8) and to maintain it on said target (8), and automatic control means (20) adapted to apply control in the selected mode to attain the designated target.

2.    Device according to claim 1,
characterised in that the aircraft is controlled automatically on the basis of instructions addressed to the flight controls based on the parameters of the aircraft and a control instruction determined by a control law according to the difference between the parameters of the aircraft and a set point value calculated according to the position of said mobile designator marker.

3.    Device according to claim 1 or claim 2,
characterised in that it comprises, for controlling the aiming line of a combat aircraft:
   a) a first control loop comprising:
      - a display device (7) for displaying the target (8) and a mobile designator marker (9) which defines the position of a current theoretical target, and
      - a circuit (10) controlling displacement of the designator marker (9) on the basis of action by the pilot (11) on a control unit according to a predetermined control law;
   b) a second control loop comprising:
      - a conventional control loop including a flight control device (12) operating on the controls of the aircraft and sensors (14) determining the aircraft parameters which are passed to the input of the flight control device (12) to be compared with set point parameters,
      - a fire control computer (16) for determining the position of a future point of impact (future shell) according to the aircraft parameters and ballistic data specific to the weapon used,
      - a circuit (17) for generating a future shell set point by prediction on the basis of displacements of the current theoretical target,
      - a circuit (19) for determining the offset between the position of the future point of impact and the future shell set point, and
      - a computer (20) adapted to generate said control loop set point parameters according to a predetermined control law on the basis of said offset, the aircraft parameters and optionally actions of the pilot on the control unit.

4.    Device according to claim 3,
characterised in that said designator marker (9) is a representation of a point in space at a distance (D) from the aircraft representing an aircraft/target distance and in that the position of this point relative to a terrestrial frame of reference is calculated by a control law dependent on action of the pilot on the control unit.

5.    Device according to claim 4,
characterised in that, where said control unit is a control column, said control law is such that:
   - if no force is applied to the column, the designator speed vector is equal to the aircraft speed vector,
   - an up/down force applied to the control column controls angular speed in elevation,
   - a left/right force applied to the control column controls angular speed in bearing.

6.    Device according to claim 5,
characterised in that said control law is such that action of the pilot on the control column rotates a designator trihedron having:
   - an origin (O) at the centre of gravity of the aircraft,
   - an axis (Oxd) which passes through the designator marker (9),
   - an axis (Oyd) perpendicular to the plane defined by the aircraft speed vector and the (Oxd) axis, and
   - an axis (Ozd) perpendicular to the plane defined by the (Oxd) and (Oyd) axes.

7.    Device according to claim 4,
characterised in that, if no real target is detected, the distance (D) is limited to a predetermined value and in that when a real target is detected the distance (D) takes a value equal to the distance of the real target measured by a measuring device such as radar or telemetry.

8.    Device according to claim 3,
characterised in that said circuit for producing the future shell set point comprises a predictor circuit supplying parameters representative of the position of the future theoretical target which are then passed to a limiter which supplies information used as the future shell set point.

9. Device according to any one of the preceding claims,
characterised in that the control instructions passed to the flight control device (12) include pre-control instructions sent by a pre-control system and resulting directly from action of the pilot on the control column and control surface instructions produced by a regulator (28) which receives a signal representing the offset between the future point of impact position and the future shell set point.

10. Device according to claim 1 or claim 2,
characterised in that to control the touchdown point of the aircraft on a runway without using radio, it comprises:
- means for reconstituting a descent axis from a touchdown point (41), which then constitutes the target, designated by the pilot by means of said designator marker (42) displayed on said display device, and
- an automatic control device adapted to guide the aircraft on the reconstituted descent axis.

11. Device according to claim 10,
characterised in that said automatic control device comprises:
- a trajectory generator (43) adapted to determine a set point trajectory from information supplied by said control means representing the position of the touchdown point (41) when the touchdown point displayed on the display device and the designator marker (42) are coincident and information representing a time (T) which is computed (45) according to the estimated height (H) of the aircraft above the runway,
- means for determining the position of a point (I) situated a time period in advance of the set point trajectory by an amount equal to the calculated time period,
- means (46) for comparing the set point trajectory with the trajectory of the aircraft and determining accordingly instructions to be sent to the flight controls (47) of the aircraft.

12. Device according to claim 11,
characterised in that said set point trajectory is established in an inertial frame of reference.

13. Device according to claim 11,
characterised in that the position of the designator marker (42) is determined by a computer (48) on the basis of information supplied by the control unit and said time (T).

14. Device according to any one of claim 10 to 13,
characterised in that it comprises means for moving the set point descent plan in translation according to displacements of the designator marker (42).

## Patentansprüche

1. Vorrichtung zur Führung eines aerodynamischen Luftfahrzeugs ausgehend von einem vom Piloten bestimmten Element der Umgebung außerhalb des aerodynamischen Luftfahrzeugs,
dadurch gekennzeichnet, daß sie Mittel zur Auswahl einer Führungsart, ein Anzeigegerät (7), auf dem gleichzeitig ein Element der Außenumgebung (8), das einen zu erreichenden Zielpunkt darstellt, und eine von den Bewegungen des aerodynamischen Luftfahrzeugs unabhängige bewegliche Kennzeichnungsmarkierung (9) dargestellt werden können, Steuermittel, die es dem Piloten (11) ermöglichen, die bewegliche Kennzeichnungsmarkierung (9) zu verschieben, um sie mit dem Zielpunkt (8) in Koinzidenz zu bringen und sie auf diesem Zielpunkt (8) zu halten, und Mittel zur automatischen Führung (20) aufweist, die die der gewählten Art entsprechende Führung durchführen können, um den bestimmten Zielpunkt zu erreichen.

2. Vorrichtung nach Anspruch 1, dadurch gekennzeichnet, daß die automatische Führung des Flugzeugs ausgehend von an die Flugsteuerungen adressierten Befehlen, die in Abhängigkeit von den Parametern des aerodynamischen Luftfahrzeugs erarbeitet wurden, und von einem Führungsbefehl durchgeführt wird, der von einem Führungsgesetz abhängig vom Abstand zwischen den Parametern des aerodynamischen Luftfahrzeugs und einem in Abhängigkeit von der Position der beweglichen Kennzeichnungsmarkierung errechneten Einstellwert bestimmt wird.

3. Vorrichtung nach einem der Ansprüche 1 und 2, dadurch gekennzeichnet, daß sie zur Führung der Zielachse eines aerodynamischen Kampf-Luftfahrzeugs aufweist:
a) einen ersten Regelkreis, der aufweist:
- ein Anzeigegerät (7), das die Sichtbarmachung eines Ziels (8) und einer beweglichen Kennzeichnungsmarkierung (9) ermöglicht, die die Position eines theoretisches aktuellen Ziels definiert, und

- einen Schaltkreis (10) zur Steuerung der Verschiebungen der Kennzeichnungsmarkierung (9) ausgehend von einer Betätigung eines Steuerorgans durch den Piloten (11) gemäß einem vorherbestimmten Steuerungsgesetz;

b) einen zweiten Regelkreis, der aufweist:

- eine klassische Führungsschleife, die eine Flugsteuerungsvorrichtung (12), welche auf die Steuerflächen des Flugzeugs wirkt, sowie Sonden (14) verwendet, die es ermöglichen, die Parameter des Flugzeugs zu bestimmen, wobei diese Parameter zum Eingang der Flugsteuerungsvorrichtung (12) rückübertragen werden, um mit Einstellparametern verglichen zu werden,

- einen Schußleitungsrechner (16), der es ermöglicht, die Position eines zukünftigen Einschlagspunkts nach den Parametern des aerodynamischen Luftfahrzeugs und den ballistischen Daten der vom aerodynamischen Luftfahrzeug verwendeten Waffe zu bestimmen,

- einen Schaltkreis zur Ausarbeitung eines Einstellwerts einer zukünftigen Granate (17) durch eine Vorausberechnung, die ausgehend von den Verschiebungen des aktuellen theoretischen Ziels durchgeführt wird,

- einen Schaltkreis (19), der die Bestimmung des Abstands zwischen der Position des zukünftigen Einschlagspunkts und dem Einstellwert einer zukünftigen Granate ermöglicht, und

- einen Rechner (20), der die erwähnten Einstellparameter der Führungsschleife gemäß einem Führungsgesetz erarbeitet, das ausgehend vom erwähnten Abstand der Parameter des aerodynamischen Luftfahrzeugs und eventuell der vom Piloten durchgeführten Betätigungen des Steuerorgans bestimmt wird.

4. Vorrichtung nach Anspruch 3, dadurch gekennzeichnet, daß die Kennzeichnungsmarkierung (9) aus einer Darstellung eines Punkts im Raum besteht, der sich in einer Entfernung (D) vom aerodynamischen Luftfahrzeug befindet, wobei diese Entfernung einer Entfernung Flugzeug/Ziel entspricht, und daß die Position dieses Punkts in Bezug auf eine Erdmarkierung durch ein von den Betätigungen des Steuerorgans durch den Piloten abhängiges Steuergesetz errechnet wird.

5. Vorrichtung nach Anspruch 4, dadurch gekennzeichnet, daß dann, wenn dieses Steuerorgan aus einem Steuerknüppel besteht, das erwähnte Steuergesetz so vorgesehen ist, daß

- in Abwesenheit einer Krafteinwirkung auf den Steuerknüppel der Kennzeichnungsgeschwindigkeitsvektor gleich dem Geschwindigkeitsvektor des aerodynamischen Luftfahrzeugs ist,

- eine Krafteinwirkung auf den Steuerknüppel in der Tiefe eine Steuerung der Winkelgeschwindigkeit von oben nach unten hervorruft,

- eine seitliche Krafteinwirkung auf den Steuerknüppel eine Steuerung der Winkelgeschwindigkeit zur Seite hervorruft.

6. Vorrichtung nach Anspruch 5, dadurch gekennzeichnet, daß das oben erwähnte Steuergesetz so vorgesehen ist, daß ein vom Piloten auf den Steuerknüppel ausgeübter Steuerbefehl die Drehung eines Kennzeichnungstrieders erzeugt, das aufweist:

- einen Ursprung (O), der aus dem Schwerpunkt des aerodynamischen Luftfahrzeugs besteht,

- eine Achse (Oxd), die durch die Kennzeichnungsmarkierung (9) verläuft,

- eine Achse (Oyd), senkrecht zur vom Geschwindigkeitsvektor des aerodynamischen Luftfahrzeugs und der Achse (Oxd) gebildeten Ebene und

- eine Achse (Ozd), senkrecht zur von den Achsen (Oxd) und (Oyd) gebildeten Ebene.

7. Vorrichtung nach Anspruch 4, dadurch gekennzeichnet, daß in Abwesenheit der Erfassung eines reellen Ziels die oben erwähnte Entfernung (D) auf einen vorbestimmten Wert begrenzt ist, und daß bei der Erfassung eines reellen Ziels die Entfernung (D) einen Wert gleich der von einer Meßvorrichtung wie einem Radar oder einem Telemeter gemessenen Entfernung dieses reellen Ziels annimmt.

8. Vorrichtung nach Anspruch 3, dadurch gekennzeichnet, daß der oben erwähnte Schaltkreis, der die Ausarbeitung des Einstellwerts einer zukünftigen Granate ermöglicht, einen prädiktiven Schaltkreis aufweist, der es ermöglicht, die repräsentativen Parameter der Position des zukünftigen theoretischen Ziels zu liefern, wobei diese Parameter dann auf einen Begrenzer übertragen werden, der Informationen liefert, die als Einstellwert zukünftiger Granaten dienen.

9. Vorrichtung nach einem der vorhergehenden Ansprüche, dadurch gekennzeichnet, daß die zur Flugsteuerungsvorrichtung (12) übertragenen Steuerbefehle Vorsteuerbefehle, die von einer Vorsteuerkette übertragen werden und direkt aus den Betätigungen des Steuerknüppels durch den Piloten resultieren, und Steuerflächenbefehle enthalten, die von einem Regulator (28) erarbeitet werden, der ein für den Abstand zwischen der Position des zukünftigen Einschlagspunkts und dem Einstellwert der zukünftigen Granate repräsentatives Signal empfängt.

10. Vorrichtung nach einem der Ansprüche 1 und 2, dadurch gekennzeichnet, daß sie zur Durchführung der Führung des Landepunkts des aerodynamischen Luftfahrzeugs auf einer Landepiste ohne Verwendung radioelektrischer Mittel aufweist:
    - Mittel, die es ermöglichen, ausgehend von einem vom Piloten mittels der erwähnten im Anzeigegerät angezeigten Kennzeichnungsmarkierung (42) bestimmten Einschlagpunkt (41) (der dann das Ziel darstellt) eine Abstiegsachse nachzubilden, und
    - eine Autopilot-Vorrichtung, die die Führung des aerodynamischen Luftfahrzeugs auf der so nachgebildeten Abstiegsachse bewirkt.

11. Vorrichtung nach Anspruch 10, dadurch gekennzeichnet, daß die erwähnte Autopilot-Vorrichtung aufweist:
    - einen Flugbahngenerator (43), der eine Einstellflugbahn ausgehend von den von den erwähnten Steuermitteln gelieferten Informationen, welche für die Position des Einschlagpunkts (41) repräsentativ sind, wenn der auf dem Anzeigegerät dargestellte Einschlagpunkt und die Kennzeichnungsmarkierung (42) zusammenfallen, und einer Information bestimmt, die repräsentativ für eine Zeit (T) ist, welche abhängig von der geschätzten Höhe (H) des aerodynamischen Luftfahrzeugs oberhalb der Piste errechnet wird,
    - Mittel, die es ermöglichen, die Position eines Punkts (I) zu bestimmen, der so viele Sekunden nach vorne auf der Einstellflugbahn angeordnet ist wie die errechnete Zeit,
    - Mittel (46), die es ermöglichen, die Einstellflugbahn mit der Flugbahn des aerodynamischen Luftfahrzeugs zu vergleichen, und in Abhängigkeit von diesem Vergleich die an die Flugsteuerungen (47) des aerodynamischen Luftfahrzeugs auszugebenden Befehle zu bestimmen.

12. Vorrichtung nach Anspruch 11, dadurch gekennzeichnet, daß die oben erwähnte Einstellflugbahn in einer Trägheitsmarkierung erstellt wird.

13. Vorrichtung nach Anspruch 11, dadurch gekennzeichnet, daß die Position der Kennzeichnungsmarkierung (42) von einem Rechner (48) ausgehend von den vom Steuerorgan gelieferten Informationen und der erwähnten Zeit (T) bestimmt wird.

14. Vorrichtung nach einem der Ansprüche 10 bis 13, dadurch gekennzeichnet, daß sie Mittel aufweist, die es ermöglichen, die Einstellabstiegsebene in Abhängigkeit von den Verschiebungen der Kennzeichnungsmarkierung (42) zu übertragen.

FIG.1

CIBLE

AXE DE VISEE

PARAMETRES AVION

FIG.2

ECART D'ASSERVIS--SEMENT

PARAMETRES AVION

FIG.3

FIG.4

FIG.5

FIG.6

EP 0 285 463 B1

FIG.7

# FIG.8

# FIG.9

FIG.11

FIG.12

FIG.13

FIG.10

EP 0 285 463 B1